# FASCICULE DE BREVET EUROPEEN

(11) **EP 3 058 310 B1**
(45) Date de publication et mention de la délivrance du brevet: **20.12.2017**
(21) Numéro de dépôt: 14790209.2
(22) Date de dépôt: 30.09.2014
(51) Int. Cl.: G01B 7/004, F16H 61/02, G05G 9/047, F16H 59/10

(54) **DISPOSITIF DE DETECTION DE LA POSITION D'UN LEVIER EN PARTICULIER D'UN LEVIER DE COMMANDE DE VITESSES ET LEVIER DE COMMANDE DE VITESSES CORRESPONDANT**
VORRICHTUNG ZUR DETEKTION DER POSITION EINES HEBELS, INSBESONDERE EINES GESCHWINDIGKEITSSTEUERHEBELS UND ENTSPRECHENDER GESCHWINDIGKEITSSTEUERHEBEL
DEVICE FOR DETECTING THE POSITION OF A LEVER, IN PARTICULAR OF A SPEED CONTROL LEVER, AND CORRESPONDING SPEED CONTROL LEVER

(30) Priorité: 14.10.2013 FR 1359961
(43) Date de publication de la demande: 24.08.2016
(73) Titulaire: Renault S.A.S., 92100 Boulogne-Billancourt (FR)
(72) Inventeur: AUZAS, Frédéric, F-75014 Paris (FR)
(86) Numéro de dépôt international: PCT/FR2014/052479
(87) Numéro de publication internationale: WO 2015/055912

(56) Documents cités:
- EP-A1- 2 112 406
- US-A1- 2010 060 577
- US-A1- 2010 294 067

## Description

La présente invention se rapporte à un levier de commande, tel qu'un levier de vitesses, déplaçable dans deux directions orthogonales à partir d'une position centrale de référence, vers plusieurs positions fonctionnelles déportées.

Elle a pour objet un dispositif de détection de la position d'un levier de commande basculant autour d'un point fixe sur un support dans deux directions orthogonales à partir d'une position de repos en direction de positions fonctionnelles de référence, comportant une cible magnétique qui se déplace avec le levier autour du point fixe dans les deux directions orthogonales, et un capteur de position fixe sur le support du levier disposant d'au moins une zone de détection capable de convertir l'amplitude du champ magnétique local rayonné par la cible dans un repère centré sur le capteur, en signaux électriques. Ces signaux sont à destination d'un calculateur de position qui, par comparaison avec une cartographie, leur associe une position de la cible dans l'espace. De tels dispositifs sont décrits par exemple dans EP 2 112 406 A1 et US 2010/0294067 A1. Cette invention a également pour objet un levier de commande de vitesses.

Elle trouve une application privilégiée, mais non limitative, sur un levier de commande de vitesses, déplaçable vers des positions fonctionnelles, telles que les positions « Parking », Marche Arrière (« Reverse »), Marche avant (« Drive ») ou Neutre (« Neutral »).

La sécurité de fonctionnement d'une commande de vitesses exige de savoir à chaque instant sans équivoque, si la position réelle du levier reflète la volonté du conducteur. La détection de position d'un levier de commande de vitesses s'effectue le plus souvent avec un système sans contact. Une cible, telle qu'un aimant magnétisé axialement, se déplace avec le levier. Un capteur magnétique, du type capteur à effet Hall à trois dimensions, convertit l'amplitude d'un champ magnétique, en information électrique. Le calculateur reçoit l'information codant la position du levier de vitesses dans une cartographie interférant la grille des positions possibles (Reverse, Neutral, Drive, etc.) du levier.

Un tel dispositif est capable de détecter les déplacements dans l'espace d'une cible magnétique fixée sur un levier de commande de vitesses, lorsqu'il est déplacé par le conducteur dans deux directions orthogonales autour de sa position de référence, vers des positions fonctionnelles identifiées. Selon une disposition habituelle dans le domaine, le capteur magnétique est positionné dans l'axe de l'aimant au repos. Le capteur à effet Hall, par exemple de marque commerciale « Melexis Triaxis », peut intégrer deux puces intégrant des cellules Hall sensibles au champ magnétique de la cible. Par un calcul interne, il sait déterminer l'amplitude des composantes du champ magnétique de l'aimant, permettant ainsi de le repérer dans l'espace suivant un repère cartésien (ou éventuellement sphérique). En dessous d'une certaine plage d'amplitude de champ, les mesures ne sont pas fiables. A l'inverse, les signaux de sortie sont saturés au-dessus de certaines amplitudes. Ainsi, la position relative de la cible par rapport au capteur, ne permet pas toujours de mesurer l'ensemble des composantes, et ainsi de situer correctement le levier par rapport à ses positions fonctionnelles de référence.

La présente invention, qui est décrite dans la revendication indépendante 1, vise à optimiser la détection de la position d'un levier de commande par son aimant, en permettant au capteur de détecter correctement les trois composantes cartésiennes de son champ magnétique, dans toute la zone de fonctionnement du levier.

Dans ce but, elle propose que les zones de détection soient placées dans un des secteurs de détection simultanée, pour toutes les positions du levier, des composantes cartésiennes du champ magnétique de la cible en projection dans le repère.

Ce résultat est obtenu, soit en inclinant le capteur et en le déportant par rapport au centre du repère, soit en positionnant l'aimant par rapport au levier, de façon à ce que le champ rayonné et son amplitude soient adaptés au capteur.

La présente invention sera mieux comprise à la lecture de la description suivante d'un mode de réalisation non limitatif de celle-ci, en se reportant aux dessins annexés, sur lesquels :
- la figure 1 illustre une grille de commande de vitesses de transmission automatique ou automatisée,
- la figure 2, est un schéma d'intégration de l'aimant et du capteur dans un levier de vitesses,
- la figure 3 est un schéma du champ magnétique rayonné par un aimant magnétisé axialement,
- la figure 4 montre les secteurs de détection des trois composantes du champ magnétique rayonné par l'aimant sur le plan du capteur, et
- les figures 5A et 5B illustrent le principe respectivement dans une première disposition possible du capteur, et dans une deuxième position particulière, proposée par l'invention.

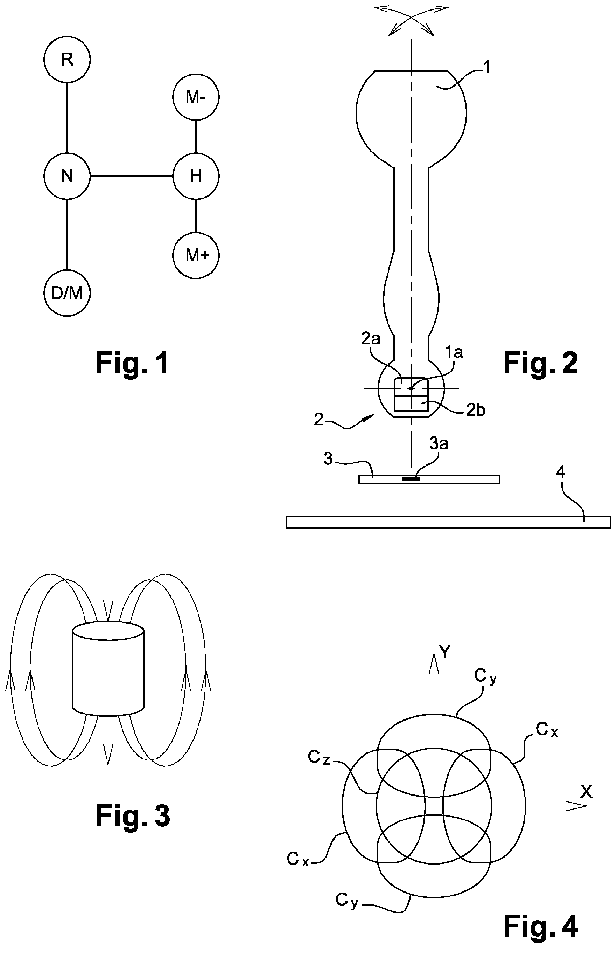

La grille de vitesses de la figure 1, est un exemple non limitatif de grille de commande de boîte de vitesses automatique ou automatisée, disposant des positions Marche Arrière (« Reverse »), Marche avant (« Drive ») ou Neutre (« Neutral »), Manuel (H) passage montant (+) et passage descendant (-), accessibles à partir d'une position centrale de repos.

Le levier de vitesses 1 de la figure 2, est muni d'un pommeau de prise en main à sa partie supérieure. Le levier est représenté en position verticale de repos. Il présente un point fixe la de pivot, autour duquel il peut basculer dans deux directions orthogonales, lorsqu'il est pris en main par le conducteur. Dans sa partie inférieure, il présente un aimant magnétisé axialement 2, avec un pôle Nord 2a et un pôle Sud 2b, qui constitue une cible magnétique. Dans sa position de repos, l'aimant 2 est aligné verticalement sur une zone sensible 3a du capteur, composée d'éléments sensibles ou zones de détection. Le capteur magnétique 3 est localisé sur une partie fixe du véhicule, par exemple un élément du support fixe (non représenté) du levier de vitesse 1. La zone de détection 3a est capable de convertir l'amplitude du champ magnétique local rayonné par la cible, dans un repère cartésien du capteur (X, Y, Z) centré sur le capteur 3, en signaux électriques, lus par une carte électronique 4, à destination d'un calculateur de position. Par comparaison avec une cartographie, le calculateur associe aux signaux du capteur une position de la cible dans l'espace, et en déduit la position du levier, sur la grille de vitesses. La position du levier 1 est une information essentielle au bon fonctionnement du véhicule, qui doit pouvoir être détectée à chaque instant, notamment pour connaître la situation fonctionnelle de la transmission, et pour détecter des positionnements erratiques du levier 1, en cas de disfonctionnement. Le capteur magnétique 3 utilisé, peut être par exemple un capteur de la marque « Melexis Triaxis » intégrant une ou plusieurs puces (ou cellules de détection). Toutefois, dans le cadre de la présente invention, d'autres types de capteurs peuvent aussi être choisis.

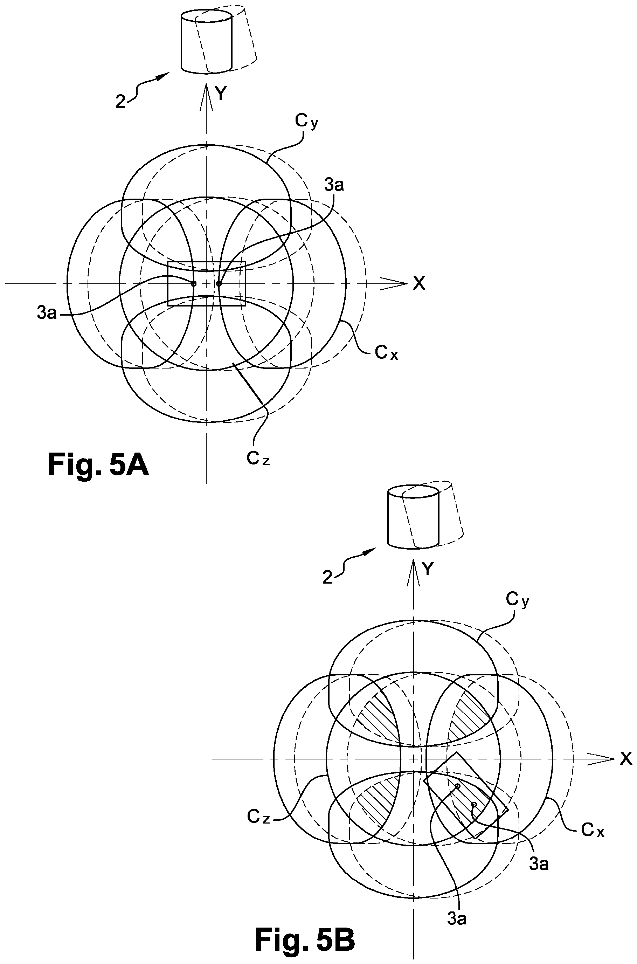

Le capteur 3 est constitué d'une puce de quelques millimètres de côté et quelques millimètres d'épaisseur, qui présente des raccords de connexion latéraux (non représentés) et une ou plusieurs parties, ou zones sensibles 3a, sous forme de cellules sensibles aux champs magnétiques. Ces zones de détection 3a, sont capables de convertir l'amplitude du champ magnétique local rayonné par la cible dans un repère (X, Y) centré sur le capteur, en signaux électriques à destination d'un calculateur de position. Par comparaison avec une cartographie, le calculateur associe ces signaux à une position de la cible dans l'espace. La présence de deux zones de détection 3a, visibles sur les figures 5A et 5B, assure la sécurité des mesures par redondance, dès lors que l'une des deux zones est capable de mesurer le champ magnétique rayonné par l'aimant 2. Ce doublage est très utile, dans le cas particulier de dysfonctionnement de l'une des cellules, ou plus simplement si l'une d'elles se trouve à l'écart du secteur où l'amplitude du champ magnétique de l'aimant 2 devient trop faible pour être mesurée. Les zones 3a visibles sur les figures 5A et 5B sont relativement proches, pour assurer des mesures sensiblement équivalentes de l'amplitude du champ magnétique. Ces mesures assurent la redondance de l'information souhaitée, et des mesures de position qui en résultent, sur au moins une partie des secteurs de détection simultanée.

L'analyse par simulation de la cartographie du champ magnétique de la cible (l'aimant 2), permet de déterminer des zones de fonctionnement optimales, dans lesquelles les composantes du champ Bx, By, Bz sont détectables par les zones sensibles (cellules) 3a du capteur 3. Toutefois, il est important de tenir compte des effets de dispersion (variations de la magnétisation de l'aimant, de la position de l'aimant au montage par rapport au levier, de la position relative aimant-capteur, de la fabrication des supports, etc.), qui induisent une erreur sur la lecture de la position de la cible. Ainsi, pour assurer la fonction sécuritaire de la détection de position du levier de vitesse, il faut pouvoir optimiser cette détection.

La figure 3 représente schématiquement le champ magnétique rayonné par l'aimant 2, magnétisé axialement, du levier 1. La figure 4 dessine le contour des secteurs Cx, Cy, Cz, où un capteur 3 peut mesurer chaque composante Bx, By, Bz du champ magnétique de l'aimant 2. A l'extérieur de ces secteurs, leur amplitude est trop faible pour que le capteur puisse la mesurer. Sur les figures 5A et 5B, on a représenté dans le même repère cartésien à deux dimensions (X, Y) un capteur 3, avec ses deux zones sensibles 3a. On retrouve aussi le contour Cx, Cy, Cz de cinq secteurs de capture, correspondant aux secteurs de détection des trois composantes Bx, By, Bz du vecteur champ magnétique de l'aimant, projeté sur ce repère.

Les figures 5A et 5B montrent cette projection du champ pour deux positions de la cible 2, correspondant respectivement à la position de repos du levier (traits pleins) une seconde position, correspondant à un déplacement du levier dans la direction X. Ces secteurs peuvent être déterminés pour chaque position du levier lors de son déplacement dans les deux directions orthogonales (X, Y) du plan de référence du capteur, et en altitude (Z) sur l'axe aimant capteur. En dehors de ces cinq secteurs identifiés sur les schémas, la valeur des composantes est trop faible pour être détectée. Sans sortir du cadre de l'invention, les composantes du vecteur champ magnétique peuvent aussi être rapportées dans un repère sphérique.

Lorsque le levier s'écarte de sa position de repos, l'ensemble des contours Cx, Cy CZ se déplace (et se déforme) en bloc avec l'aimant. Les quatre secteurs hachurés de la figure 5B sont les zones de recouvrement des intersections des cinq secteurs de capture, pour les positions du levier sur la grille : elles identifient dans le repère orthonormé X, Y, les secteurs où les trois composantes cartésiennes Bx, By, Bz du champ pourraient être détectées simultanément par une zone sensible du capteur 3, pour toutes les positions du levier.

Sur les figures 5A et 5B, on a représenté les zones de détection superposées pour seulement deux positions de la grille, afin de ne pas alourdir le schéma. Mais cette superposition peut être faite pour toutes les positions du levier. Sur la figure 5A, le capteur 3 est centré sur le repère, et orienté selon les axes X et Y. Dans cette disposition, toutes les composantes ne sont pas accessibles par le capteur : la composante en Z sur l'axe aimant/capteur peut toujours être correctement mesurée, mais ne suffit pas à déterminer de façon sûre à elle seule, la position du levier ; la composante Y ne peut pas être lue au départ, et la composante en X est à la limite de sa zone de réception.

Sur la figure 5B, le capteur est incliné par rapport aux axes du repère, et déporté sur un des secteurs d'intersection des trois zones de capture Cx, Cy, Cz. Dans cette nouvelle configuration, les trois composantes Bx, By, Bz sont détectées simultanément, car les zones de détection 3a sont placées dans le secteur de détection simultanée pour toutes les positions du levier, en inclinant le capteur 3 et en le déportant par rapport au centre du repère.

En déplaçant le capteur 3, et notamment les éléments sensibles 3a dans une zone de champ optimale pour le bon fonctionnement du capteur, il est possible d'assurer la validité des trois composantes dans la quasi-majorité des cas, et de bénéficier d'une redondance de l'information. La disposition optimale n'est pas unique, mais peut être l'une des quatre intersections des secteurs de réception identifiés. On peut ainsi retenir parmi quatre positions possibles, celle qui permet de positionner au mieux les éléments sensibles 3a. Conformément à l'invention, les zones 3a sont placées dans le secteur de détection simultanée de toutes les positions du levier, en positionnant la cible magnétique 2 par rapport au levier, de façon à ce que le champ rayonné, et son amplitude soient adaptés au capteur 3.

En résumé, les zones de détection sont placées dans un des secteurs de détection simultanée d'au moins deux composantes Bx, By du champ magnétique de la cible en projection dans le repère, et éventuellement de sa composante d'altitude sur un axe (Z) orthogonal au repère (X, Y) du capteur.

En variante, les zones de détection 3a peuvent être placées dans un des secteurs de détection simultanée pour toutes les positions du levier, des composantes du champ magnétique de la cible 2, en projection dans un repère sphérique.

La définition optimale d'implantation des zones sensibles 3a du capteur, peut en outre être modifiée en fonction :
- de la taille de l'aimant,
- de sa nature (niveau d'aimantation),
- de la distance entre les éléments sensibles du capteur et l'aimant (le champ magnétique décroit avec la distance depuis l'aimant),
- des plages de sensibilités au champ magnétique du capteur
- des plages de fonctionnement en température,
- des tolérances de dispersion (position, vieillissement, température, ...),
- du déplacement de l'aimant avec le mouvement du levier de vitesse, et
- des perturbations de sources environnantes.

En tenant compte de l'ensemble des déplacements de l'aimant par rapport à la grille de position du levier de vitesse, on bénéficie d'une zone commune autour de la position de repos, certes réduite, mais suffisamment large pour que l'ensemble des composantes du champ magnétique soient valides. En tolérant des cas où la détection ne s'appuie non pas sur trois composantes mais seulement deux, cette zone s'agrandit. Dans le mode de réalisation de la figure 5B, les deux éléments sensibles sont utilisables, ce qui permet d'utiliser correctement la redondance d'information, et de détecter les positions erratiques du levier, en cas de défaillance d'une des deux cellules du capteur.

Comme indiqué plus haut, l'invention concerne, tant une optimisation de la position relative du capteur et de l'aimant, qu'un procédé de positionnement optimal pour une application de détection de position basée sur ce principe.

De plus, la méthode permet toujours de trouver une zone où les composantes en x et en y (c'est-à-dire dans le plan du capteur) sont valides. Dans ces conditions, il est possible d'utiliser non pas un capteur à trois dimensions, mais un capteur à seulement deux dimensions, de moindre coût.

La méthode proposée est également transposable au positionnement relatif, non plus du capteur, mais de l'aimant. On peut ainsi positionner l'aimant par rapport à son support, c'est-à-dire le levier, de façon à ce que le champ rayonné et son amplitude soient adaptés au capteur. Cette solution peut être mise en oeuvre en décalant l'aimant sur le levier, par exemple avec une orientation particulière et/ou avec une aimantation plus complexe.

En résumé, l'optimisation recherchée est mise en oeuvre, soit en en inclinant le capteur et en le déportant par rapport au centre du repère, soit en positionnant l'aimant par rapport au levier, de façon à ce que le champ rayonné et son amplitude soient adaptés au capteur.

Dans la description ci-dessus, le capteur présente deux puces intégrant des cellules Hall, de manière à bénéficier d'une redondance de l'information. Sans sortir du cadre de l'invention, le capteur peut aussi ne disposer que d'une seule puce, dans un dispositif plus simple, mais non redondant.

En conclusion, il faut souligner que l'invention s'applique à tout dispositif de commande nécessitant un capteur, tel qu'un capteur à trois ou deux dimensions mentionné plus haut. Elle consiste aussi en une méthode de détermination de la bonne zone de fonctionnement du capteur vis-à-vis de l'application, permettant d'optimiser la zone de détection, en fonction de la géométrie et de la nature de l'aimant. Dans le mode de réalisation particulier de l'invention décrit, le levier de commande concerné est un levier de vitesses de véhicule automobile. Toutefois, l'invention est applicable sur tout autre levier de commande, ou « joystick », basculé dans deux directions.

## Revendications

1. Dispositif de détection de la position d'un levier de commande (1) basculant autour d'un point fixe (1a) sur un support dans deux directions orthogonales à partir d'une position de repos en direction de positions fonctionnelles de référence, comportant une cible magnétique se déplaçant avec le levier (1) autour du point fixe (1a) et un capteur de position (3) fixe sur le support du levier, la cible étant alignée verticalement sur la zone sensible du capteur dans sa position de repos, et le capteur disposant d'au moins une zone de détection (3a) capable de détecter sur son plan de référence (X, Y) la projection de trois composantes (Bx, By, Bz) du champ magnétique de la cible, dont deux composantes horizontales (Bx, By) et une composante d'altitude (Bz) sur un axe (Z) orthogonal au plan de référence (X, Y), et de convertir l'amplitude du champ magnétique en signaux électriques à destination d'un calculateur de position qui, par comparaison avec une cartographie, associe aux signaux une position de la cible dans l'espace, **caractérisé en ce que** les zones de détection (3a) sont placées dans un des secteurs de détection simultanée des deux composantes horizontales (Bx, By) et de la composante d'altitude (Bz) du champ magnétique de la cible (2) en projection dans le repère plan (X, Y) du capteur (3) pour les positions du levier.

2. Dispositif de détection selon la revendication 1, **caractérisé en ce que** les zones de détection (3a) sont placées dans un des secteurs de détection simultanée, des composantes du champ magnétique de la cible (2) en projection dans un repère sphérique, pour toutes les positions du levier.

3. Dispositif de détection selon la revendication 1 ou 2, **caractérisé en ce que** le capteur (3) comporte deux zones de détection (3a) permettant une redondance de mesures de position sur au moins une partie du secteur de détection simultanée pour toutes les positions du levier.

4. Dispositif de détection selon la revendication 1, 2 ou 3, **caractérisé en ce que** le levier (1) est un levier de commande de vitesses.

5. Dispositif de détection selon l'une des revendications précédentes, **caractérisé en ce que** les zones de détection (3a) sont placées dans le secteur de détection simultanée pour toutes les positions du levier, en inclinant le capteur (3) et en le déportant par rapport au centre du repère.

6. Dispositif de détection selon la revendication 5, **caractérisé en ce que** les zones (3a) sont placées dans le secteur de détection simultanée pour toutes les positions du levier, en positionnant la cible magnétique (2) par rapport au levier, de façon à ce que le champ rayonné et son amplitude soient adaptés au capteur (3).

7. Levier de commande de vitesses (1), **caractérisé en ce qu'**il comporte un dispositif de détection de position conforme à l'une des revendications 1 à 6.

## Patentansprüche

1. Vorrichtung zur Erfassung der Position eines Steuerhebels (1), der um einen Fixpunkt (1a) auf einem Träger in zwei orthogonale Richtungen von einer Ruheposition in Richtung von Referenzbetriebspositionen schwenkt, umfassend ein magnetisches Ziel, das sich mit dem Hebel (1) um den Fixpunkt (1a) bewegt, und einen Positionsfühler (3), der auf dem Träger des Hebels befestigt ist, wobei das Ziel vertikal auf der sensiblen Zone des Fühlers in seiner Ruheposition ausgerichtet ist, und wobei der Fühler über mindestens eine Erfassungszone (3a) verfügt, die geeignet ist, auf ihrer Referenzebene (X, Y) die Projektion von drei Komponenten (Bx, By, Bz) des Magnetfelds des Ziels, unter anderem zwei horizontalen Komponenten (Bx, By) und einer Höhenkomponente (Bz) auf einer Achse (Z) orthogonal zur Referenzebene (X, Y) zu erfassen und die Amplitude des Magnetfels in elektrische Signale in Richtung eines Positionsrechners umzuwandeln, der durch Vergleich mit einer Kartografie den Signalen eine Position des Ziels im Raum zuordnet, **dadurch gekennzeichnet, dass** die Erfassungszonen (3a) in einem der Sektoren der gleichzeitigen Erfassung der zwei horizontalen Komponenten (Bx, By) und der Höhenkomponente (Bz) des Magnetfelds des Ziels (2) in Projektion in dem ebenen Bezugspunkt (X, Y) des Fühlers (3) für die Positionen des Hebels angeordnet sind.

2. Erfassungsvorrichtung nach Anspruch 1, **dadurch gekennzeichnet, dass** die Erfassungszonen (3a) in einem der Sektoren der gleichzeitigen Erfassung der Komponenten des Magnetfelds des Ziels (2) in Projektion in einem sphärischen Bezugspunkt für alle Positionen des Hebels angeordnet sind.

3. Erfassungsvorrichtung nach Anspruch 1 oder 2, **dadurch gekennzeichnet, dass** der Fühler (3) zwei Erfassungszonen (3a) umfasst, die eine Redundanz von Positionsmessungen auf mindestens einem Teil des Sektors der gleichzeitigen Erfassung für alle Positionen des Hebels ermöglichen.

4. Erfassungsvorrichtung nach Anspruch 1, 2 oder 3, **dadurch gekennzeichnet, dass** der Hebel (1) ein Geschwindigkeitssteuerhebel ist.

5. Erfassungsvorrichtung nach einem der vorhergehenden Ansprüche, **dadurch gekennzeichnet, dass** die Erfassungszonen (3a) in dem Sektor der gleichzeitigen Erfassung für alle Positionen des Hebels angeordnet sind, wobei der Fühler (3) geneigt und in Bezug zur Mitte des Bezugspunktes versetzt wird.

6. Erfassungsvorrichtung nach Anspruch 5, **dadurch gekennzeichnet, dass** die Zonen (3a) in dem Sektor der gleichzeitigen Erfassung für alle Positionen des Hebels angeordnet sind, wobei das magnetische Ziel (2) in Bezug zum Hebel derart angeordnet wird, dass das Strahlungsfeld und seine Amplitude an den Fühler (3) angepasst sind.

7. Geschwindigkeitssteuerhebel (1), **dadurch gekennzeichnet, dass** er eine Vorrichtung zur Positionserfassung nach einem der Ansprüche 1 bis 6 umfasst.

## Claims

1. Device for detecting the position of a control lever (1) swivelling about a fixed point (1a) on a support in two orthogonal directions from a rest position in the direction of functional reference positions, comprising a magnetic target which moves with the lever (1) about the fixed point (1a) and a position sensor (3) fixed on the support of the lever, the target being aligned vertically with the sensitive zone of the sensor in its rest position, and the sensor having at least one detection zone (3a) capable of detecting in its reference plane (X, Y) the projection of three components (Bx, By, Bz) of the magnetic field of the target, viz. two horizontal components (Bx, By) and an altitude component (Bz) along an axis (Z) orthogonal to the reference plane (X, Y), and of converting the amplitude of the magnetic field into electrical signals destined for a position calculator which, by comparing with a mapping, associates with the signals a position of the target in space, **characterized in that** the detection zones (3a) are placed in one of the sectors of simultaneous detection of the two horizontal components (Bx, By) and of the altitude component (Bz) of the magnetic field of the target (2) by projection in the plane frame (X, Y) of the sensor (3) for the positions of the lever.

2. Detection device according to Claim 1, **characterized in that** the detection zones (3a) are placed in one of the sectors of simultaneous detection, of the components of the magnetic field of the target (2) by projection in a spherical frame, for all the positions of the lever.

3. Detection device according to Claim 1 or 2, **characterized in that** the sensor (3) comprises two detection zones (3a) allowing a redundancy of position measurements on at least one part of the simultaneous-detection sector for all the positions of the lever.

4. Detection device according to Claim 1, 2 or 3, **characterized in that** the lever (1) is a speed control lever.

5. Detection device according to one of the preceding claims, **characterized in that** the detection zones (3a) are placed in the simultaneous-detection sector for all the positions of the lever, by tilting the sensor (3) and by offsetting it with respect to the centre of the frame.

6. Detection device according to Claim 5, **characterized in that** the zones (3a) are placed in the simultaneous-detection sector for all the positions of the lever, by positioning the magnetic target (2) with respect to the lever, in such a way that the radiated field and its amplitude are suited to the sensor (3).

7. Speed control lever (1), **characterized in that** it comprises a position detection device in accordance with one of Claims 1 to 6.
